# EUROPEAN PATENT APPLICATION

(11) **EP 4 521 151 A1**
(43) Date of publication of application: **12.03.2025**
(21) Application number: 24197691.9
(22) Date of filing: 30.08.2024
(51) Int. Cl.: G02B 6/44

(54) **SEALING MECHANISM ON FIBER OPTIC TERMINALS**

(30) Priority: 08.09.2023 US 202363537306 P
(71) Applicant: Corning Research & Development Corporation, Corning, New York 14831 (US)
(72) Inventor: GAUDYNSKA, Marta Eliza, 93-142 Lodz (PL); KLAK, Robert Tomasz, 98220 Zdunska Wola (PL); MCKINNEY, Larry Todd, Keller, 76248 (US); RUDA, Michal, 95-060 Brzeziny (PL); ZAPPEK, Andreas, 46539 Dinslaken (DE)
(74) Representative: Reddie & Grose LLP

(57) **Abstract**

In general, the present disclosure relates to a sealing system that includes a first section with a first sealing element including a plurality of cutouts where each of the plurality of cutouts have a plurality of sections having variable widths to accommodate different diameter optical fiber cables within a terminal. The sealing system also includes a second section having a second sealing element where the second sealing element includes a slit that has a width that accommodates a diameter of an optical fiber tubing extending from the optical fiber cables.

## Description

### PRIORITY APPLICATION

This application claims the benefit of priority of U.S. Provisional Application No. 63/537,306, filed on September 8, 2023, the content of which is relied upon and incorporated herein by reference in its entirety.

### FIELD

The technology of the disclosure relates to fiber optic terminal components and more particularly, to compression sealing mechanisms for fiber optic terminals.

### BACKGROUND

Cables (such as used to carry communication fiber) are often routed in and out of communications equipment cabinets and other enclosures in order to connect with various communications equipment. The cables are often secured at the entry point(s) into the enclosures to maintain a certain arrangement, and in some cases, to provide added stability. Current securing mechanisms include cable glands, cable ties, sealing foams, or other structures that require additional tools for installation. Cable glands are expensive and require a high level of skill from installers. Alternatively, although cable ties are less expensive than cable glands, cable ties cause problems over time. Both cable glands and cable ties require the installer to measure the outer diameter of the cable being installed and then to use a properly sized cable gland or cable tie wrap, which requires additional time and is sometimes difficult when space is limited.

Sealing foams are generally designed for a given and limited cable diameter causing challenges for installers if a wide range of outer diameters of cables are required in the equipment. This can result in an installer first measuring the outer diameter of the cable they want to install into the equipment, and then either (1) removing the corresponding amount of foam according to the measured diameter or (2) putting tape around the cable jacket to ensure no gap if there is a size mismatch between the outer diameter of the cable and the cutout of the foam.

Improvements in the foregoing are desired.

### SUMMARY

The invention is defined in the independent claims. Optional features are set out in the dependent claims.

In general, the present disclosure relates to a sealing system that includes a first section with a first sealing element including a plurality of cutouts where each of the plurality of cutouts have a plurality of sections having variable widths to accommodate different diameter optical fiber cables within a terminal. The sealing system also includes a second section having a second sealing element where the second sealing element includes a slit that has a width that accommodates a diameter of an optical fiber tubing extending from the optical fiber cables.

In one embodiment, a terminal is provided. The terminal comprising: a base comprising a sealing system having a first section and a second section; a first sealing element received in the first section, wherein the first sealing element comprises a plurality of cutouts, wherein each of the plurality of cutouts comprises a plurality of sections each configured to receive a different diameter of an optical fiber cable; a second sealing element received in the second section, wherein the second sealing element comprises a slit that has a width to receive an optical fiber tubing of the optical fiber cable.

Optionally, the terminal further comprises: a cover coupled to the base, the cover comprising a sealing block, the cover being movable between an open position and a closed position; wherein in the open position, the sealing block is in a first position and not engaged with the first sealing element of the sealing system; wherein in the closed position, the sealing block is in contact with the first sealing element such that the sealing block applies a force onto the first sealing element. Optionally, the sealing system further comprises a front end and a rear end, wherein the rear end is positioned within the base, and wherein the sealing system further comprises: a strain relief system adjacent to the first section at the front end of the sealing system. Optionally, the plurality of cutouts of the first sealing element comprises: a first cutout having a first width; a second cutout adjacent to the first cutout, the second cutout having a second width that is smaller than the first width; and wherein the first cutout is proximal to the front end of the sealing system. Optionally, the terminal further comprises a second sealing system coupled to the first sealing system such that a first row and a second row are defined for each receiving at least one optical fiber cable. Optionally, the second sealing system further comprises: a first section and a second section; wherein: a first sealing element received in the first section, wherein the first sealing element comprises a plurality of cutouts, wherein each of the plurality of cutouts comprises a plurality of sections each configured to receive a different diameter of an optical fiber cable; a second sealing element received in the second section, wherein the second sealing element comprises a slit that has a width to receive an optical fiber tubing of the optical fiber cable. Optionally, the terminal further comprises: a cover coupled to the base, the cover comprising a sealing block, the cover being movable between an open position and a closed position; wherein in the open position, the sealing block is not engaged with the first sealing element of the sealing system; wherein in the closed position, the sealing block is in contact with the first sealing element of the second sealing system such that the sealing block applies a force onto the first sealing element.

In one embodiment, a method for sealing one or more cables in a terminal, the terminal comprising a base that includes a sealing system having a first section and a second section, and the terminal also comprising a cover coupled to the base is provided. The method comprises: inserting a first sealing element into the first section of the sealing system; inserting a second sealing element into the second section of the sealing system; inserting an optical fiber cable into the first section, wherein an optical fiber tubing extends from the optical fiber cable and extends through the first section and the second section of the sealing system; moving the cover from an open position to a closed position so that a sealing block of the cover contacts the first sealing element such that the sealing block applies a force onto the first sealing element.

Optionally, the sealing system further comprises a front end and a rear end, wherein the rear end is positioned within the base, and wherein the sealing system further comprises: a strain relief system adjacent to the first section at the front end of the sealing system. Optionally, the first sealing element comprises a plurality of cutouts, wherein each of the plurality of cutouts comprises a plurality of sections each configured to receive a different diameter of an optical fiber cable; the second section receives a second sealing element comprising a slit that has a width to receive an optical fiber tubing of the optical fiber cable. Optionally, the plurality of cutouts of the first sealing element comprises: a first cutout having a first width; a second cutout adjacent to the first cutout, the second cutout having a second width that is smaller than the first width; and wherein the first cutout is proximal to a front end of the sealing system.

Optionally, the method further comprises: coupling a second sealing system to the first sealing system such that a first row and a second row are defined for each receiving at least one optical fiber cable. Optionally, the second sealing system further comprises: a first section and a second section; wherein: a first sealing element received in the first section, wherein the first sealing element comprises a plurality of cutouts, wherein each of the plurality of cutouts comprises a plurality of sections each configured to receive a different diameter of an optical fiber cable; a second sealing element received in the second section, wherein the second sealing element comprises a slit that has a width to receive an optical fiber tubing of the optical fiber cable.

In one embodiment, a terminal assembly for housing optical fibers and optical cables is provided. The terminal assembly comprising: a base comprising a sealing system having a front end and a rear end, wherein the rear end is positioned within the base, the sealing system further comprising a first section and a second section; a first sealing element received in the first section, wherein the first sealing element comprises a plurality of cutouts, wherein each of the plurality of cutouts comprises a plurality of sections each configured to receive a different diameter of an optical fiber cable; wherein the plurality of cutouts comprise a first cutout having a first width and a second cutout adjacent to the first cutout having a second width that is different than the first width; a second sealing element received the second section, wherein the second sealing element comprises a slit that has a width to receive an optical fiber tubing of the optical fiber cable; a cover coupled to the base, the cover comprising a sealing block, the cover is movable between an open position and a closed position; wherein in the open position, the sealing block is not engaged with the first sealing element of the sealing system; wherein in the closed position, the sealing block is in contact with the first sealing element such that the sealing block applies a force onto the first sealing element.

Optionally, the terminal assembly further comprises a second sealing system coupled to the first sealing system such that a first row and a second row are defined for each receiving at least one optical fiber cable. Optionally, the second sealing system further comprises: a first section and a second section; wherein: a first sealing element received in the first section, wherein the first sealing element comprises a plurality of cutouts, wherein each of the plurality of cutouts comprises a plurality of sections where each section is configured to receive a different diameter of an optical fiber cable; a second sealing element received in the second section, wherein the second sealing element comprises a slit that has a width to receive an optical fiber tubing of the optical fiber cable. Optionally, the terminal assembly further comprising an optical fiber cable inserted into one of the plurality of cutouts, wherein the optical fiber cable is seated into one of the first cutout and the second cutout; an optical fiber tubing extending from the optical fiber cable and passing through the slit of the second sealing element of the second section.

Additional features and advantages are set forth in the Detailed Description that follows, and in part will be readily apparent to those skilled in the art from the description or recognized by practicing the embodiments as described in the written description and claims hereof, as well as the appended drawings. It is to be understood that both the foregoing general description and the following Detailed Description are merely exemplary, and are intended to provide an overview or framework to understand the nature and character of the claims.

### BRIEF DESCRIPTION OF THE DRAWINGS

The accompanying drawings are included to provide a further understanding, and are incorporated in and constitute a part of this specification. The drawings illustrate one or more embodiment(s), and together with the Detailed Description serve to explain principles and operation of the various embodiments. As such, the disclosure will become more fully understood from the following Detailed Description, taken in conjunction with the accompanying Figures, in which:
FIG. 1 is a perspective view of a terminal in accordance with the present disclosure;
FIG. 2 is a perspective view of a cover of the terminal of FIG. 1 in accordance with the present disclosure;
FIG. 3 is a perspective view of a base of the terminal of FIG. 1 in accordance with the present disclosure;
FIG. 3A is an enlarged perspective view of a sealing system in the base of FIG. 3 in accordance with the present disclosure;
FIG. 3B is an enlarged view of a section of the sealing system shown in FIG. 3A in accordance with the present disclosure;
FIG. 4 is an exploded view of the sealing system of FIG. 3A;
FIG. 5 and 5A are perspective views of the base of FIG. 3 that illustrates the method of assembling the sealing system of FIG. 3A and assembling the terminal of FIG. 1 in accordance with the present disclosure; and
FIGS. 6 and 7 are cross-section views of the sealing system of FIG. 3A when the cover of FIG. 2 is moved from an open position to a closed position in accordance with the present disclosure.

### DETAILED DESCRIPTION

Various embodiments will be clarified by examples in the description below. In general, the present disclosure relates to a sealing system that includes a first section with a first sealing element including a plurality of cutouts where each of the plurality of cutouts have a plurality of sections having variable widths to accommodate different diameter optical fiber cables within a terminal. The sealing system also includes a second section having a second sealing element where the second sealing element includes a slit that has a width that accommodates a diameter of an optical fiber tubing extending from the optical fiber cables.

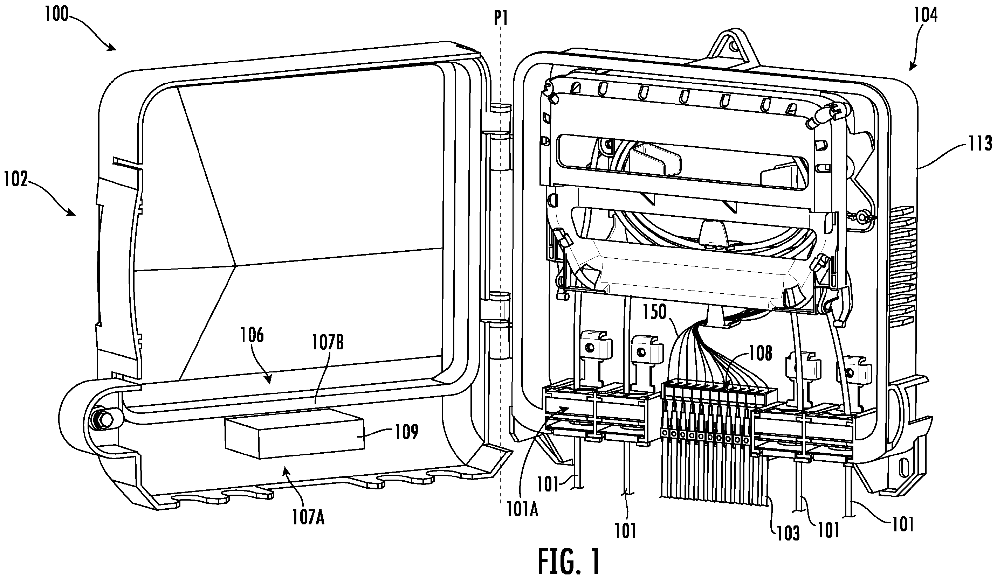

Referring first to FIGS. 1-3, a terminal 100 is shown. Terminal 100 comprises a cover 102 and a base 104 hingedly coupled to each other. As shown and discussed herein, cover 102 and base 104 are hingedly coupled to each other such that cover 102 is moveable between an open position and a closed position.

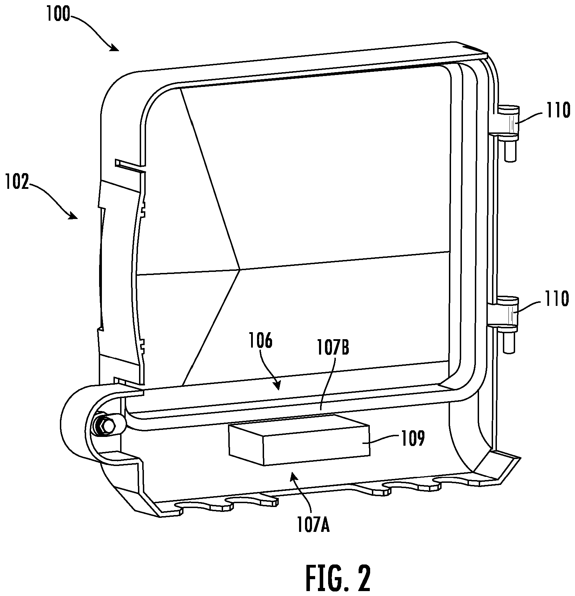

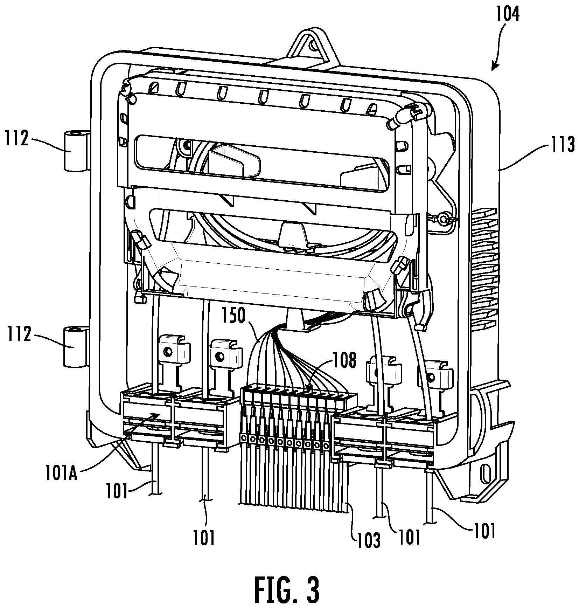

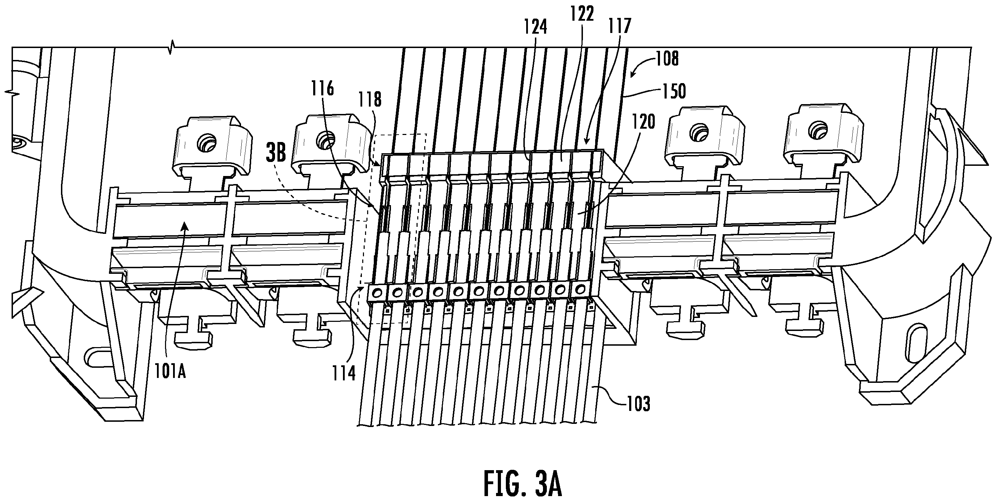

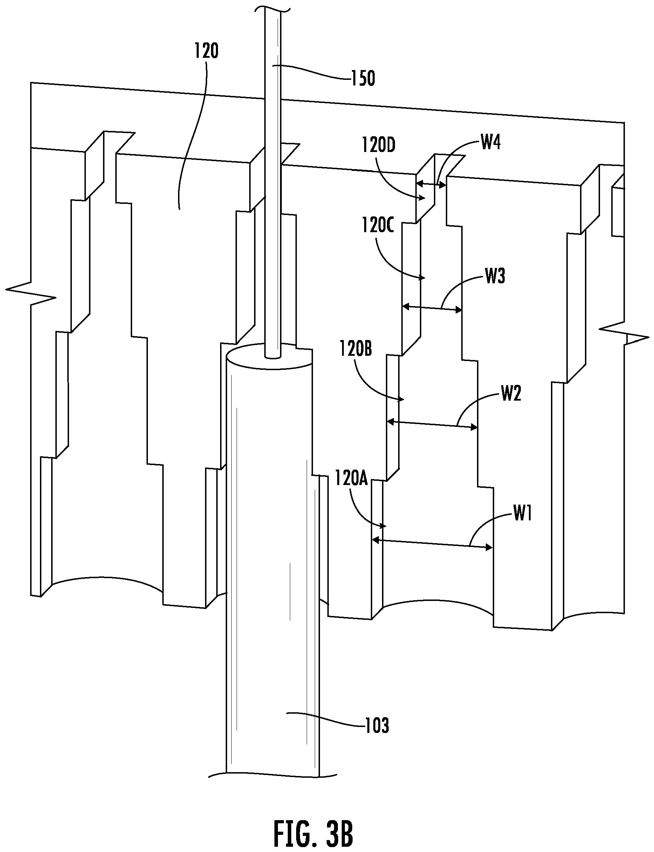

Referring briefly to FIG. 2, cover 102 comprises a cover panel 105 and a sealing block 106. Cover panel 105 is sized and configured to have substantially the same dimensions as base 104 such that cover panel 105 spans an interior of base 104 and thereby, provides protection of an interior of base 104 from external elements (e.g., debris, etc.). Cover panel 105 further includes hinges 110 that are configured to be received within hinge receivers 112 (FIG. 3) when cover 102 is coupled to base 104. When cover 102 is coupled to base 104, hinges 110 and hinge receivers 112 define a pivot axis P1 (FIG. 1) around which cover 102 and/or base 104 can rotate to toggle terminal 100 between an open configuration and a closed configuration.

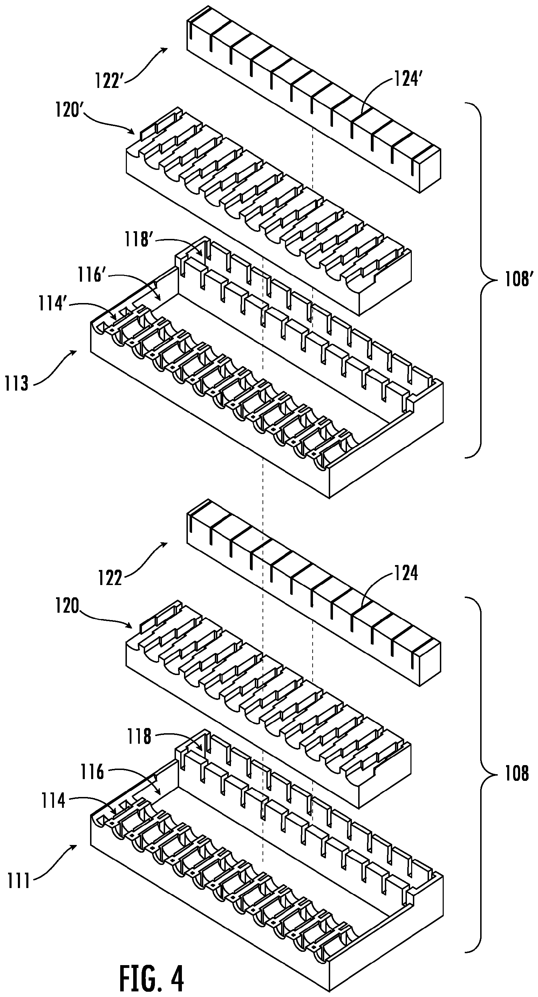

As mentioned previously, cover 102 includes a sealing block 106. Sealing block 106 is configured to contact a sealing system 108 of base 104 when moving cover 102 to a closed position. In particular, sealing block 106 contacts sealing system 108 and applies forces onto a first sealing element 120 (FIGS. 3A and 4) and second sealing element 122 of sealing system 108 as discussed in greater detail herein. As can be appreciated from FIGS. 2, 3A, and 4 and discussed further below, the sealing block 106 includes corresponding sealing elements 107A, 107B that are seated onto first section 116, second section 118 of sealing system 108, respectively, when cover 102 is in the closed configuration. Stated another way, the sealing element 107A of sealing block 106 includes an edge 109 that engages with the first sealing element 120 of sealing system 108, and sealing element 107B engages with the second sealing element 122 of sealing system 108 as cover 102 is moved to a closed position. In addition, this engagement applies a force onto an output cable 103 seated within the first sealing element 120 to create a seal around the output cable 103 as discussed herein. In some embodiments, sealing element 107 is made of a foam material. However, it is within the scope of the present disclosure that in alternate embodiments, other suitable materials may be used.

Referring now to FIG. 3, base 104 provides an interior for housing optical fibers from input cables 101 and output cables 103. In addition, base 104 provides internal routing within the interior of base 104 such that optical fibers from input cables 101 are connected to corresponding optical fibers from output cables 103 (e.g., via splice), which exit base 104 of terminal 100 as shown. In addition to including sealing system 108, base 104 comprises a frame 113 to define an interior within base 104 and a sealing system 108. Frame 113 also includes hinge receivers 112 that are configured to receive hinges 110 of cover 102 as discussed above and a plurality of openings 101A that are configured to receive input cables 101. As shown, the plurality of openings 101A include a sealing element 101B included therein to provide sealing onto input cable 101. In some embodiments, sealing element 101B is made of a foam material. However, it is within the scope of the present disclosure that alternate suitable materials may be used. While FIGS. 1-3 illustrate a terminal 100 having multiple cables 101 entering base 104, it is within the scope of the present disclosure that in some embodiments, a singular cable 101 enters terminal 100 with a plurality of output cables exiting terminal 100.

With reference to FIGS. 3A-3B and 4, sealing system 108 comprises a strain relief system 114, a first section 116 adjacent to the strain relief system 114, and a second section 118 adjacent to the first section 116. Strain relief system 114 is positioned at a front end 115 of sealing system 108, and strain relief system 114 receives output cables 103 and is configured to provide fixation for output cables 103 that are housed within strain relief system 114. In some embodiments, strain relief system 114 comprises metal clamps to hold output cables 103 in place. However, it is within the scope of the present disclosure that alternate suitable strain relief systems 114 may be used. In other embodiments, strain relief system 114 is not included within sealing system 108. In this embodiment where no strain relief system 114 is present, sealing elements 120, 122 of sealing system 108 are made of suitable materials to provide strain relief to output cables 103 (for example, silicone, a gel material or the like) due to high friction interactions between the sealing elements 120, 122 and the inserted output cables 103.

First section 116 is adjacent to the strain relief system 114 and receives a first sealing element 120 within the first section 116. As shown, first sealing element 120 includes a plurality of cutouts 120A-120D that are adjacent and in communication with each other. Referring briefly to FIG. 3B, each cutout of the plurality of cutouts 120A-120D has a different width W1-W4 where cutout 120A is proximal to front end 115 of sealing system 108 and cutout 120D is proximal to second section 118. The different widths W1-W4 accommodate different diameters of output cable 103 such that output cables 103 are snugly seated within first section 116 and a seal is provided about the circumference of such output cables 103 when terminal 100 is closed. Stated another way, each cutout 120A-120D has a different width W1-W4 and are configured in a decreasing width arrangement as shown. Such an arrangement enables output cables 103 of a particular diameter to be seated within a particular cutout as the subsequent cutout would not match in width to accommodate the corresponding outer diameter of output cables 103. For example, in an embodiment where width W1 is 8 mm, width W2 is 6 mm, width W3 is 4 mm, and width W4 is 2 mm and where an output cable 103 having an outer diameter of 8 mm is inserted into first section 116, the output cable 103 would sit within width W1 of cutout 120A and optical fiber tubing 150 would extend therefrom as the width W2 of cutout 120B would be too small to accommodate the outer diameter of output cable 103. Similarly, if the output cable 103 had an outer diameter of 2 mm, then output cable 103 would advance through first section 116 until the output cable 103 is received in cutout 120D which has the accommodating width W4 to snugly hold output cable 103. While widths W1-W4 are outlined above as having particular values, it is within the scope of the present disclosure that alternate suitable widths may be used. In some embodiments, sealing element 120 is made of a foam material. However, it is within the scope of the present disclosure that alternate suitable materials may be used for sealing element 120. As used herein, "optical fiber tubing 150" may be used to refer to embodiments where individual 900 micron tight buffered fibers are used, embodiments where multiple optical fibers may be housed within a tube (e.g., a subunit jacket), or the like.

Second section 118 is adjacent to first section 116 as mentioned previously, and is configured to provide a pathway for optical fiber tubing 150 to pass through second section 118 and rear end 117 of sealing system 117 into the interior of base 104 of terminal 100. In particular, second section 118 includes a second sealing element 122 housed within second section 118. Second sealing element 122 includes a plurality of slits 124 that are configured to provide a pathway for optical fiber tubing 150 to pass through rear end 117 and into terminal 100. Stated another way, each of the plurality of slits 124 provided in second sealing element 122 are in alignment with the plurality of cutouts 120A-120D such that optical fiber tubing 150 extending from output cable 103 can pass through cutouts 120A-120D and slit 124 into terminal 100. Similar to cutouts 120A-120D, slits 124 have a width that correspond to the diameter of optical fiber tubing 150 such that optical fiber tubing 150 is snugly fit within the slit 124 and a seal is provided when terminal 100 is closed.

Referring briefly to FIG. 4, in some embodiments, a second sealing system 108' can be included with terminal 100. As shown, second sealing system 108' includes the same components as sealing system 108 as described herein, and like structures in this embodiment have the same reference number with a prime (') included (e.g., first section 116' of sealing system 108' is analogous to first section 116 of sealing system 108). However, instead of being coupled to base 104 of terminal 100, second sealing system 108' is coupled onto sealing system 108. In this configuration, first and second rows 111 and 113 of output cables 103 and optical fibers 150 passing through sealing systems 108, 108' are defined.

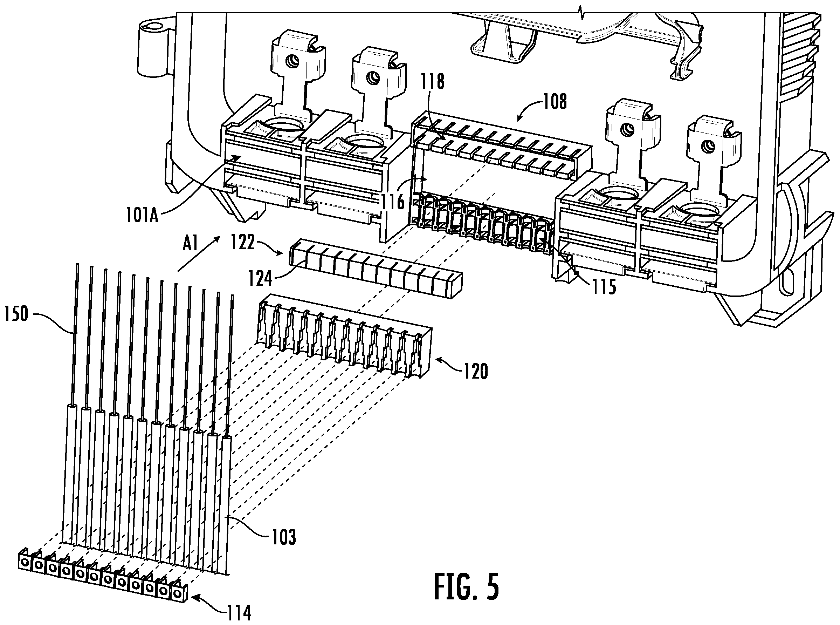

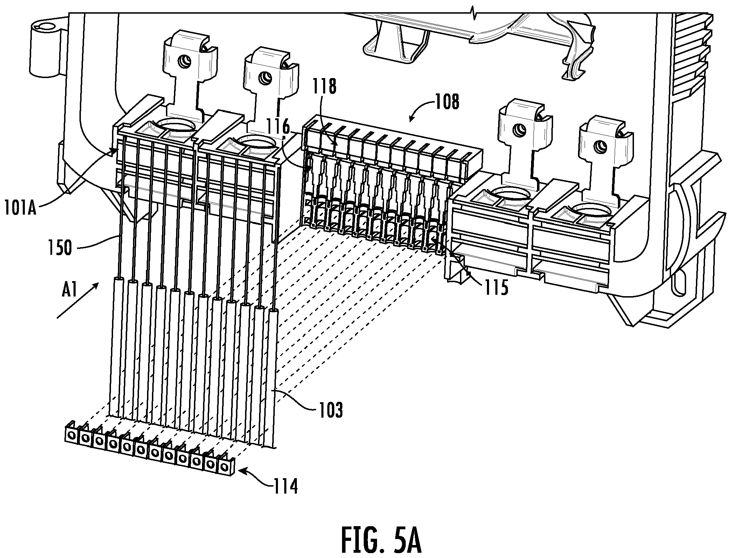

Referring now to FIGS. 5 and 5A, a method of assembling sealing system 108 is shown. As mentioned previously and shown in FIG. 5, first and second sealing elements 120, 122 are moved along direction A1 and inserted into first and second sections 116, 118, respectively, of sealing system 108. In some embodiments, a second sealing system 108' may be installed onto terminal 100. In particular, second sealing system 108' would be moved along direction A1 and coupled onto sealing system 108; then, the corresponding sealing elements 120', 122' of second sealing system 108' would be moved along direction A1 and inserted into the corresponding first and second sections 116', 118' of second sealing system 108'. Then, as discussed herein and as shown in FIG. 5A, output cables 103 and optical fibers 150 are moved along direction A1 and inserted into sealing system 108 where output cables 103 are seated onto the first sealing element 120 of the first section 116 within the corresponding cutout 120 based on the diameter of the cable jacket of the output cable 103. Optical fiber tubing 150 extends from output cables 103 such that optical fiber tubing 150 extends from output cables 103 partially within the first section 116, through second section 118, and into base 104 of terminal 100 via slits 124 provided in second sealing element 122. Finally, strain relief system 114 is also moved along direction A1 and applied onto the jackets of output cables 103 proximate the front end 115 of sealing system 108.

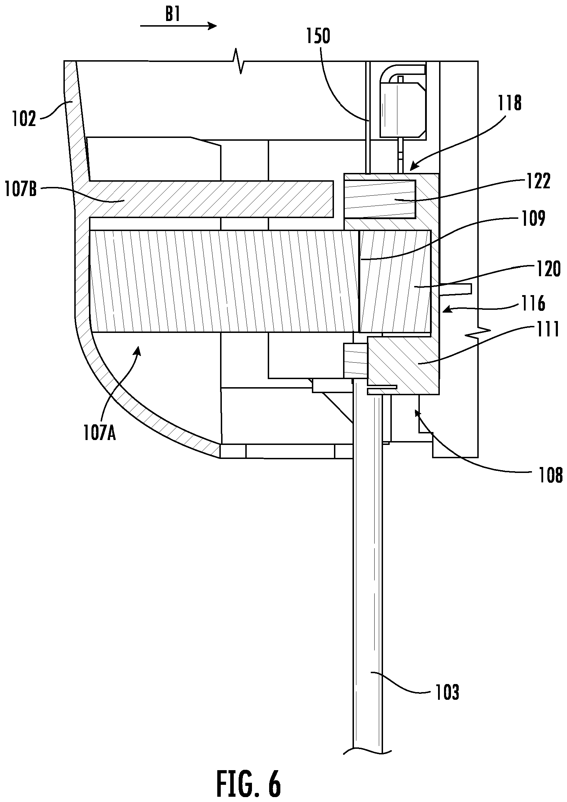

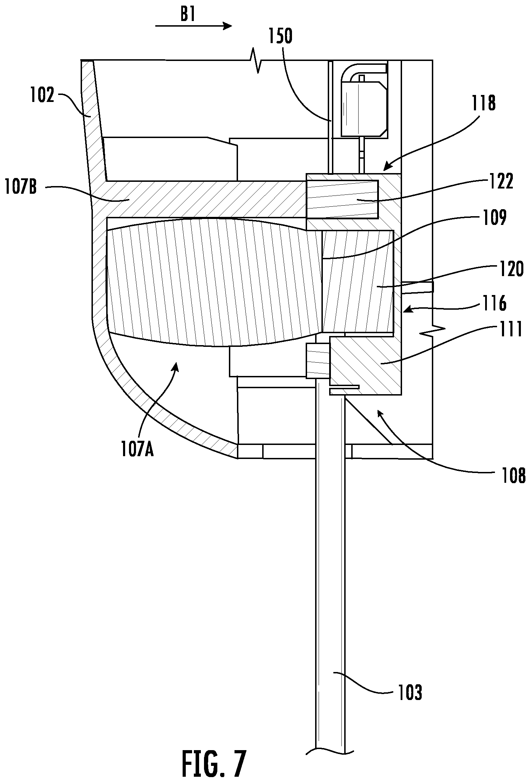

Referring now to FIGS. 6 and 7, a method of applying the sealing system 108 is shown. Referring first to FIG. 6, cover 102 is first moved along direction B1 to transition cover 102 from an open position to a closed position by rotating cover 102 about pivot axis P1. As shown in FIG. 6, as cover 102 moves along direction B1, sealing block 106 approaches and engages with at least a portion of sealing system 108. In particular, corresponding sealing elements 107A, 107B of sealing block 106 engage with first sealing element 120 of the first section 116 and second sealing element 122 of second section 118 of sealing system 108, respectively. As shown in FIG. 7, cover 102 continues to move along direction B1 such that sealing block 106 applies a compressive force onto the sealing system 108 where the output cable 103 that is seated within one of the cutouts 120A-120D of the first sealing element 120 of the first section 116 of sealing system 108. This compressive force provides a seal around the output cable 103. Similarly, sealing block 106 also applies a compressive force onto the second section 118 of sealing system 108. This compressive force provides a seal around the optical fiber tubing 150 that extends through the second section 118 of sealing system 108 and into base 104.

It will be apparent to those skilled in the art that various modifications to the preferred embodiments of the disclosure as described herein can be made without departing from the spirit or scope of the disclosure as defined in the appended claims.

Thus, the disclosure covers the modifications and variations provided they come within the scope of the appended claims and the equivalents thereto.

## Claims

1. A terminal comprising:
a base comprising a sealing system having a first section and a second section;
a first sealing element received in the first section, wherein the first sealing element comprises a plurality of cutouts, wherein each of the plurality of cutouts comprises a plurality of sections each configured to receive a different diameter of an optical fiber cable;
a second sealing element received in the second section, wherein the second sealing element comprises a slit that has a width to receive an optical fiber tubing of the optical fiber cable.

2. The terminal of claim 1, further comprising:
a cover coupled to the base, the cover comprising a sealing block, the cover being movable between an open position and a closed position;
wherein in the open position, the sealing block is in a first position and not engaged with the first sealing element of the sealing system;
wherein in the closed position, the sealing block is in contact with the first sealing element such that the sealing block applies a force onto the first sealing element.

3. The terminal of claim 1, wherein the sealing system further comprises a front end and a rear end, wherein the rear end is positioned within the base, and wherein the sealing system further comprises:
a strain relief system adjacent to the first section at the front end of the sealing system.

4. The terminal of claim 1 or claim 3, wherein the plurality of cutouts of the first sealing element comprises:
a first cutout having a first width;
a second cutout adjacent to the first cutout, the second cutout having a second width that is smaller than the first width; and
wherein the first cutout is proximal to the front end of the sealing system.

5. The terminal of any of claim 1 or claims 3-4, further comprising a second sealing system coupled to the first sealing system such that a first row and a second row are defined for each receiving at least one optical fiber cable.

6. The terminal of claim 5, wherein the second sealing system further comprises:
a first section and a second section;
wherein:
a first sealing element received in the first section, wherein the first sealing element comprises a plurality of cutouts, wherein each of the plurality of cutouts comprises a plurality of sections each configured to receive a different diameter of an optical fiber cable;
a second sealing element received in the second section, wherein the second sealing element comprises a slit that has a width to receive an optical fiber tubing of the optical fiber cable.

7. The terminal of claim 5 or claim 6, further comprising:
a cover coupled to the base, the cover comprising a sealing block, the cover being movable between an open position and a closed position;
wherein in the open position, the sealing block is not engaged with the first sealing element of the sealing system;
wherein in the closed position, the sealing block is in contact with the first sealing element of the second sealing system such that the sealing block applies a force onto the first sealing element.

8. A method for sealing one or more cables in a terminal, the terminal in accordance to claim 1, the method comprising:
inserting the first sealing element into the first section of the sealing system;
inserting the second sealing element into the second section of the sealing system;
inserting the optical fiber cable into the first section, wherein the optical fiber tubing extends from the optical fiber cable and extends through the first section and the second section of the sealing system;
moving the cover from an open position to a closed position so that a sealing block of the cover contacts the first sealing element such that the sealing block applies a force onto the first sealing element.

9. The method of claim 8, wherein the sealing system further comprises a front end and a rear end, wherein the rear end is positioned within the base, and wherein the sealing system further comprises:
a strain relief system adjacent to the first section at the front end of the sealing system.

10. The method of claim 8 or claim 9, wherein the first sealing element comprises a plurality of cutouts, wherein each of the plurality of cutouts comprises a plurality of sections each configured to receive a different diameter of an optical fiber cable;
the second section receives a second sealing element comprising a slit that has a width to receive an optical fiber tubing of the optical fiber cable.

11. The method of claim 10, wherein the plurality of cutouts of the first sealing element comprises:
a first cutout having a first width;
a second cutout adjacent to the first cutout, the second cutout having a second width that is smaller than the first width; and
wherein the first cutout is proximal to a front end of the sealing system.

12. The method of claim 11, further comprising:
coupling a second sealing system to the first sealing system such that a first row and a second row are defined for each receiving at least one optical fiber cable.

13. The method of claim 12, wherein the second sealing system further comprises:
a first section and a second section;
wherein:
a first sealing element received in the first section, wherein the first sealing element comprises a plurality of cutouts, wherein each of the plurality of cutouts comprises a plurality of sections each configured to receive a different diameter of an optical fiber cable;
a second sealing element received in the second section, wherein the second sealing element comprises a slit that has a width to receive an optical fiber tubing of the optical fiber cable.

14. A terminal assembly for housing optical fibers and optical cables comprising:
a terminal in accordance with any of claims 1-7;
an optical fiber cable inserted into one of the plurality of cutouts, wherein the optical fiber cable is seated into one of the first cutout and the second cutout;
an optical fiber tubing extending from the optical fiber cable and passing through the slit of the second sealing element of the second section.
